(19) Europäisches Patentamt / European Patent Office / Office européen des brevets

(11) **EP 1 757 630 A1**

(12) **EUROPEAN PATENT APPLICATION**
published in accordance with Art. 158(3) EPC

(43) Date of publication:
**28.02.2007 Bulletin 2007/09**

(51) Int Cl.:
*C08F 283/12* (2006.01)    *C08L 51/08* (2006.01)
*C08L 101/00* (2006.01)

(21) Application number: **05734719.7**

(22) Date of filing: **25.04.2005**

(86) International application number:
**PCT/JP2005/007841**

(87) International publication number:
**WO 2005/105876 (10.11.2005 Gazette 2005/45)**

(84) Designated Contracting States:
**AT BE BG CH CY CZ DE DK EE ES FI FR GB GR HU IE IS IT LI LT LU MC NL PL PT RO SE SI SK TR**

(30) Priority: **28.04.2004 JP 2004132794**

(71) Applicant: **Kaneka Corporation
Kita-ku
Osaka-shi, Osaka 530-8288 (JP)**

(72) Inventors:
• **HASHIMOTO, Tomomichi
5660072 (JP)**
• **TAKAKI, Akira
Kobe-shi,
Hyogo,
6570068 (JP)**

(74) Representative: **Vossius & Partner
Siebertstrasse 4
81675 München (DE)**

(54) **GRAFT COPOLYMER AND RESIN COMPOSITIONS CONTAINING THE SAME**

(57) A thermoplastic resin excellent in the effect of improving flame retardancy and impact resistance, and a composition containing the resin. A polyorganosiloxane-containing graft copolymer obtained by: adding 0.1 to 10 parts by weight of a graft-linking agent (C) to 30 to 94.9 parts by weight of a polyorganosiloxane (B) modified with a graft-linking agent (A) and in a latex form to react them with each other; reacting the above reaction product with 0 to 10 parts by weight of a monomer (F) comprising 100 to 20 % by weight of a polyfunctional monomer (D) that has two or more polymerizable unsaturated bonds in its molecule and 0 to 80 % by weight of another polymerizable monomer (E) in one or more steps; and polymerizing 5 to 69.9 parts by weight of a vinyl monomer (G) with the above reaction product in one or more steps (the total amount of (B), (C), (F) and (G) being 100 parts by weight), **characterized in that** the graft-linking agent (C) used has a higher graft efficiency than the graft-linking agent (A), and a resin composition containing the above graft copolymer.

**Description**

TECHNICAL FIELD

The present invention relates to a polyorganosiloxane-containing graft copolymer and a resin composition containing the polyorganosiloxane-containing graft copolymer which excels in flame retardancy and impact resistance.

BACKGROUND ART

Polycarbonate resins are in wide use as materials for electric/electronic parts, OA instruments, household articles or building materials because of their excellent impact resistance, heat resistance and electric properties. Although polycarbonate resins have excellent flame retardancy compared with polystyrene resins and so on, there have been demands in some fields, particularly in the fields of electric/electronic parts and OA instruments, towards much more excellent flame retardancy, and there have been attempted improvement in the flame retardancy by adding various flame-retardants. There has been proposed use of polyorganosiloxane compounds (also referred to silicones) as non-halogen and non-phosphorus flame-retardants. As a method for producing a flame-retardant resin composition using a polyorganosiloxane compound, there has been known, for example, a method in which a silicone resin composed of monoorganopolysiloxane is kneaded into a non-silicone polymer (Patent Document 1). However, silicone resins certainly have the effect of imparting flame retardancy to the resultant resin compositions, but the effect is not sufficient. And if the amount of a silicone resin is increased so as to compensate for the insufficient flame retardancy, the impact resistance of the resin composition deteriorates. Thus, there remains a problem that it is difficult to obtain a flame-retardant resin composition that excels in both flame retardancy and impact resistance.
As a method for producing a flame-retardant resin composition in which a polyorganosiloxane compound is used to impart good impact resistance to the resin composition, there has been known a method in which specific amounts of a polyorganosiloxane-containing graft copolymer, which is prepared by graft-polymerizing a vinyl monomer onto polyorganosilixane particles with 0.2 $\mu$m or less in diameter, and polytetrafluoroethylene are mixed into a thermoplastic resin (Patent Document 2).
However, a sufficient level of flame retardancy has not been achieved in any one of the flame-retardant resin compositions of the prior art for thin-wall molded products in increasing demand on the market or formulations containing a smaller amount of an anti-dripping agent necessary to meet halogen controls or reduction of raw material costs. Thus a substantial improvement in flame retardancy is desirable. Further, to maintain a balance between melt-flow properties and impact resistance of the thin-wall products, a higher impact resistance is also desirable.
Patent Document 1: JP 54-36365 A
Patent Document 2: JP 2003-238639 A

DISCLOSURE OF THE INVENTION

Problems to be Solved by the Invention

Accordingly, the object of the present invention is to provide a polyorgsnosiloxane-containing graft copolymer that gives excellent flame retardancy and impact resistance and provide a resin composition excellent in flame retardancy and impact resistance by using the graft copolymer.

Means for Solving the Problems

After directing intensive research efforts toward the solution of the above described problems, the present inventors have found that a flame-retardant resin composition that excels in both flame retardancy and impact resistance can be obtained by: first, reacting polyorganosiloxane modified with a graft-linking agent until its polymerization conversion reaches an equilibrium; then, adding a silane compound different from the above graft-linking agent to the reaction product and allowing them to react with each other under specified conditions; and then copolymerizing vinyl monomers with the latex of the above-described polyorganosiloxane; and lastly, mixing the graft copolymer into a thermoplastic resin. Thus they have finally accomplished the present invention.
Specifically, the present invention relates to a polyorganosiloxane-containing graft copolymer obtained by: adding 0.1 to 10 parts by weight of a graft-linking agent (C) to 30 to 94.9 parts by weight of a polyorganosiloxane (B) modified with a graft-linking agent (A) and in a latex form to react them with each other; reacting the resultant reaction product with 0 to 10 parts by weight of a monomer (F) comprising 100 to 20 % by weight of a polyfunctional monomer (D) that has two or more polymerizable unsaturated bonds in its molecule and 0 to 80 % by weight of another polymerizable monomer (E) in one or more steps; and polymerizing 5 to 69.9 parts by weight of a vinyl monomer (G) with the above reaction product in one or more steps (the total amount of (B), (C), (F) and (G) being 100 parts by weight), characterized in that the graft-linking agent (C) used has higher graft efficiency than that of the graft-linking agent (A) (Claim 1);

a polyorganosiloxane-containing graft copolymer obtained by: adding 0.1 to 10 parts by weight of a graft-linking agent (C) comprising a (meth)acryloyloxy group-containing silane compound to 30 to 94.9 parts by weight of a polyorganosiloxane (B) modified with a graft-linking agent (A) comprising a mercapto group-containing silane compound or a vinyl group-containing silane compound and in a latex form to react them with each other; reacting the resultant reaction product with 0 to 10 parts by weight of a monomer (F) comprising 100 to 20 % by weight of a polyfunctional monomer (D) that has two or more polymerizable unsaturated bonds in its molecule and 0 to 80 % by weight of another polymerizable monomers (E) in one or more steps; and polymerizing 5 to 69.9 parts by weight of a vinyl monomer (G) with the above reaction product in one or more steps (the total amount of (B), (C), (F) and (G) being 100 parts by weight) (Claim 2);

the polyorganosiloxane-containing graft copolymer according to any one of Claims 1 and 2, wherein the reaction temperature for the graft-linking agent (C) is 20 to 60°C (Claim 3);

the polyorganosiloxane-containing graft copolymer according to any one of Claims 1 to 3, wherein the amount of the graft-linking agent (A) used is 0.1 to 10 parts by weight (Claim 4); and

a resin composition comprising the polyorganosiloxane-containing graft copolymer according to any one of Claims 1 to 4 and a thermoplastic resin (Claim 5).

Effects of the Invention

According to the present invention, a flame-retardant can be obtained which imparts highly improved flame retardancy and impact resistance to a thermoplastic resin composition and thus a flame-retardant resin composition excellent in both flame retardancy and impact resistance can be also obtained by mixing the flame-retardant into a thermoplastic resin.

BEST MODE FOR CARRYING OUT THE INVENTION

The polyorganosiloxane-containing graft copolymer used in the present invention is a polyorganosiloxane-containing graft copolymer obtained by: adding 0.1 to 10 parts by weight of a graft-linking agent (C) to 30 to 94.9 parts by weight, preferably 50 to 89.9 parts by weight, of a polyorganosiloxane (B) modified with a graft-linking agent (A) and in a latex form to react them with each other; reacting the resultant reaction product with 0 to 10 parts by weight of a monomer (F) comprising 100 to 20 % by weight of polyfunctional monomer (D) that has two or more polymerizable unsaturated bonds in its molecule and 0 to 80 % by weight of another polymerizable monomers (E) in one or more steps; and polymerizing 5 to 69.9 parts by weight, preferably 10 to 39.9 parts by weight, of a vinyl monomer (G) with the above reaction product in one or more steps (the total amount of (B), (C), (F) and (G) being 100 parts by weight), characterized in that the graft-linking agent (C) used has higher graft efficiency than that of the graft-linking agent (A). A thermoplastic resin composition wherein the polyorganosiloxane-containing graft copolymer is mixed exhibits excellent flame retardancy/impact resistance.

The polyorganosiloxane (B) used in the present invention is obtained by emulsion polymerization. The organosiloxane as the raw material for the polyorganosiloxane (B) has a structural unit expressed by the general formula: $R_mSiO_{(4-m)/2}$ (wherein R represents a substituted or unsubstituted monovalent hydrocarbon group; and m is an integer of 0 to 3) and may have any one of cyclic, straight-chain and branched-chain structures. Examples of substituted or unsubstituted monovalent hydrocarbon groups that the organosiloxane has include: methyl, ethyl, propyl and phenyl groups, and substituted hydrocarbons obtained by substituting the foregoing groups with a cyano group or the like.

When using a cyclic organosiloxane as the raw material for polyorganosiloxane, it is preferable to employ seed polymerization, because the use of seed polymerization offers advantages of being able to narrow the particle size distribution of polyorganosiloxane in a latex form and providing good flame retardancy, though polyorganosiloxane can be prepared by the ordinary emulsion polymerization. The seed polymer used in the seed polymerization is not limited to a rubber component such as butyl acrylate rubber, butadiene rubber, butadiene-styrene rubber or butadiene-acrylonitrile rubber, and a polymer such as butyl acrylate-styrene copolymer or styrene-acrylonitrile copolymer can also be used without any problem. In the seed polymerization, a chain transfer agent may also be added.

For example, emulsion polymerization of polyorganosiloxane can be performed by emulsifying/dispersing a cyclic organosiloxane and a graft-linking agent into water in the presence of an emulsifier by means of mechanical shearing, mixing the above-described seed polymer into the dispersion, and bringing the mixture to an acidic condition.

Specific examples of cyclic organosiloxanes include: hexamethylcyclotrisiloxane (D3), octamethylcyclotetrasiloxane (D4), decamethylcyclopentasiloxane (D5), dodecamethylcyclohexasiloxane (D6) and trimethyltriphenylcyclotrisiloxane. These organosiloxanes can be used alone or in combination of two or more of them.

When using a straight-chain or branched-chain organosiloxane as the raw material, a polyorganosiloxane can be produced by any one of known methods as disclosed in JP 2001-288269 A and JP 11-222554 A.

For example, a polyorganosiloxane can be obtained by an emulsion polymerization method comprising: using a (modified) dimethylpolysiloxane, which has a weight average molecular weight of 10,000 or less, preferably 5,000 or less and more preferably 3,000 or less, whose end groups are a hydroxyl group, an amino group, or a hydrolyzable group such as alkoxyl group and which has been partially substituted by a polymerizable vinyl-based group depending on the situation, together with a generally known graft-linking agent; adding water, a surfactant, etc. thereto; subjecting the mixture to a mechanically forced emulsification by means of a high-pressure homogenizer or the like to be emulsified/ dispersed into water so that an emulsion having a desired particle size is obtained; and bringing the emulsion to an acidic condition.

In the polymerization of polyorganosiloxane used in the present invention, a graft-linking agent (A) is used.

As the graft-linking agent (A), a silane compound generally known as a graft-linking agent can be used; however, it is necessary to use a silane compound having lower graft efficiency than that of a graft-linking agent (C). Use of such a silane compound allows vinyl monomer (G) to efficiently function to make the above polyorganosiloxane-containing graft copolymer and a thermoplastic resin compatible; as a result, the resultant molded product, as a final form of the resin composition, has improved flame retardancy and impact resistance. If a silane compound is used as the graft-linking agent (A) which has graft efficiency higher than or equal to that of the graft-linking agent (C), the effect of improving flame retardancy and impact resistance according to the present invention cannot be obtained. As the graft-linking agent (A), preferably a di-functional silane compound is used. If a tri- or more functional silane compound is used, the molded product as a final form of the resin composition may have lower impact resistance.

Specific examples of graft-linking agents (A) include: mercapto-group containing silane compounds such as 3-mercaptopropylmethyldimethoxysilane; and vinyl-group containing silane compounds such as vinylmethyldimethoxysilane.

The graft efficiency is determined by the following method using the following latex of a polyirganosiloxane-containing graft copolymer, as a sample. The latex of a polyorganosiloxane-containing graft copolymer used as a sample is produced by using a latex of a polyorganosiloxane prepared by modifying 100 parts by weight of octamethylcyclotetrasiloxane with 5 parts by weight of a graft-linking agent being a subject to be measured and graft-polymerizing 30 parts by weight of the above latex of a polyorganosiloxane with 70 parts by weight of methyl methacrylate. Then, the latex of a polyorganosiloxane-containing graft copolymer, as a sample, is coagulated, and the recovered solid material is immersed in acetone, the soluble matter and the insolubles in acetone are separated. The soluble matter is considered as methyl methacrylate polymer that is not bound to the polyorganosiloxane and the graft efficiency is calculated by the equation: 1 - (the amount of the methyl methacrylate polymer that is not bound to the polyorganosiloxane ÷ the total amount of the polymerized methyl methacrylate polymer).

The amount of the graft-linking agent (A) used is preferably 0.1 to 10 parts by weight, more preferably 0.5 to 7 parts by weight and particularly preferably 1 to 5 parts by weight. If the amount of the graft-linking agent used is more than 10 parts by weight, the final molded product has lower flame retardancy and impact resistance, whereas if the amount is less than 0.1 part by weight, the processability of the resin composition for producing the final molded product may be lowered.

In the synthesis of a polyorganosiloxane (B) used in the present invention, a crosslinking agent can be added if necessary. Examples of applicable crosslinking agents include: trifunctional crosslinking agents such as methyltrimethoxysilane, phenyltrimethoxysilane and ethyltriethoxysilane; and tetrafunctional crosslinking agents such as tetraethoxysilane, 1,3-bis[2-(dimethoxymethylsilyl)ethyl]benzene, 1,4-bis[2-(dimethoxymethylsilyl)ethyl]benzene, 1,3-bis[1-(dimethoxymethylsilyl)ethyl]benzene, 1,4-bis[1-(dimethoxymethylsilyl)ethyl]benzene, 1-[1-(dimethoxymethylsilyl)ethyl]-3-[2-(dimethoxymethylsilyl)ethyl]-benzene, and 1-[1-(dimethoxymethylsilyl)ethyl]-4-[2-(dimethoxymethylsilyl)ethyl]-benzene. These crosslinking agents can be used alone or in combination of those two or more. The amount of the crosslinking agent added is preferably 10 parts by weight or less and more preferably 3.0 parts by weight or less. If the amount is more than 10 parts by weight or more, the flexibility of the polyorganosiloxane (B) deteriorates, and thus the final molded product may have lower impact resistance.

In the above-described emulsion polymerization, an emulsifier is used which does not lose its emulsifying ability even under acidic conditions. Specific examples of such emulsifiers include: alkylbenzenesulfonic acid, sodium alkylbenzenesulfonate, alkylsulfonic acid, sodium alkylsulfonate, sodium (di)alkylsulfosuccinate, sodium polyoxyethylene nonylphenyl ether sulfonate and sodium alkylsulfate. These emulsifiers can be used alone or in combination of those two or more. Of the above-described emulsifiers, alkylbenzenesulfonic acid, sodium alkylbenzenesulfonate, alkylsulfonic acid, sodium alkylsulfonate and sodium (di)alkylsulfosuccinate are preferable because of their high emulsion stability. Alkylbenzenesulfonic acid and alkylsulfonic acid also function as polymerization catalysts for polyorganosiloxane forming components.

The acidic condition can be obtained by adding an inorganic acid, such as sulfuric acid and hydrochloric acid, or an organic acid, such as alkylbenzenesulfonic acid, alkylsulfonic acid or trifluoroacetic acid, to the reaction system.

The pH is adjusted to preferably 1 to 3 and more preferably 1.0 to 2.5 from the viewpoint of avoiding the corrosion of the production equipment and obtaining proper polymerization rate.

When using a cyclic siloxane as a raw material, the heating temperature for polymerization is 50°C or higher, preferably 60°C or higher and more preferably 75°C or higher, and at the same time, 140°C or lower, preferably 110°C or lower and more preferably 95°C or lower, from the viewpoint of obtaining a proper polymerization rate. When the emulsion polymerization is performed by forcing a (modified) dimethylpolysiloxane which has a weight average molecular weight of 10,000 or lower, preferably 5,000 or lower and more preferably 3,000 or lower and has an end group including hydroxyl group, amino group, or hydrolyzable group such as alkoxyl group, to be emulsified mechanically by means of a high-pressure homogenizer or the like, the heating temperature is 0°C or higher, preferably 15°C or higher and more preferably 25°C or higher, and at the same time, 100°C or lower, preferably 70°C or lower and more preferably 50°C or lower. If the heating temperature is lower than the above-described temperature, the productivity is lowered, whereas if the temperature is more than the above-described one, volatile siloxane tends to increase.

Under acidic conditions, cleavage and generation of the Si-O-Si bonds that form the framework of polyorganosiloxane is in equilibrium, and the equilibrium tends to shift to the bond generation side as the temperature becomes lower, and thus polyorganosilixane having a higher molecular weight and a higher degree of crosslinking is likely to be produced. Thus, preferably the polymerization reaction of the polyorganosiloxane constituents is allowed to proceed at 50°C or higher, and once the polymerization conversion reaches equilibrium, preferably the polyorganosiloxane is cooled to room temperature or lower and allowed to stand for 6 hours or more. If the time for which the polyorganosiloxane is kept at room temperature or lower is short, the proportion of a polyorganosiloxane having a low molecular weight is increased, which may cause the flame retardancy and impact resistance of the final molded product to deteriorate.

The graft-linking agent (C) used in the present invention is an ingredient which is used for reacting a vinyl monomer (G) intensively with the surface of the polyorganosiloxane particles and allows the vinyl monomer (G) to efficiently function to ensure the compatibility of the resultant graft copolymer with a thermoplastic resin; as a result, the resultant molded product, as a final form of the resin composition, has improved flame retardancy and impact resistance.

As the graft-linking agent (C), a silane compound generally known as a graft-linking agent can be used; however, it is necessary to use a silane compound having higher graft efficiency than that of the graft-linking agent (A). If a silane compound having a graft efficiency lower than or equal to that of a graft-linking agent (A) is used as the graft-linking agent (C), the effect of improving flame retardancy and impact resistance according to the present invention cannot be satisfactorily obtained. As the graft-linking agent (C), preferably a di-functional silane compound is used. If a tri- or more functional silane compound is used, the molded product as a final form of the resin composition may have lower impact resistance.

Specific examples of graft-linking agents (C) include: (meth)acryloyloxy-group containing silane compounds such as γ-methacryloyloxypropyldimethoxymethylsilane, γ-methacryloyloxypropyldiethoxymethylsilane and γ-acryloyloxypropyl dimethoxymethylsilane. Of these compounds, γ-methacryloyloxypropyldimethoxymethylsilane is particularly preferable.

Examples of combinations of graft-linking agents include: for example, a combination of 3-mercaptopropylmethyldimethoxysilane as the graft-linking agent (A) and γ-methacryloyloxypropyldimethoxyrnethylsilane as the graft-linking agent (C); a combination of vinylmethyldimethoxysilane as the graft-linking agent (A) and γ-methacryloyloxypropyl dimethoxymethylsilane as the graft-linking agent (C); and a combination of vinylmethyldimethoxysilane as the graft-linking agent (A) and 3-mercaptopropylmethyldimethoxysilane as the graft-linking agent (C).

The amount of the graft-linking agent (C) used is preferably 0.1 to 10 parts by weight and more preferably 0.5 to 7 parts by weight. If the amount of the graft-linking agent (C) used is more than 10 parts by weight, the final molded product has lower flame retardancy and impact resistance, whereas if the amount is less than 0.1 part by weight, the flame retardancy and impact resistance improving effect of the present invention cannot be fully attained.

In a preferred method of adding the graft-linking agent (C) to the latex of a polyorganosiloxane (B), the silane compound is emulsified in advance with pure water that contains a small amount of an emulsifier. If the silane compound is directly added to the latex of a polyorganosiloxane in the acidic condition, the graft-linking agent turns into a contaminant before it reacts with the polyorganosiloxane particles, which may result in a final molded product having lower flame retardancy and impact resistance.

Preferably, the graft-linking agent (C) exists on the surface of the polyorganosiloxane particles. If the reaction is carried out at high temperatures or continued for a long time, the graft-linking agent is uniformly dispersed in the inside of the polyorganosiloxane particles; as a result, a sufficient effect cannot be produced. Thus, in the reaction for the graft-linking agent (C), the polymerization temperature employed is 20°C to 60°C and preferably 20°C to 40°C and the polymerization time employed is 0.5 to 12 hours and preferably 1 to 4 hours. If the polymerization temperature is lower than 20°C or the polymerization time is less than 0.5 hour, the graft-linking agent (C) may remain unreacted, whereas if the polymerization temperature is higher than 60°C or the polymerization time is more than 12 hours, the graft-linking agent is uniformly dispersed in the polyorganosiloxane particles, which may result in a final molded product having lower flame retardancy and impact resistance.

If the latex having been reacted with the graft-linking agent (C) is left for a long time under the acidic conditions, the amount of the graft-linking agent on the surface of the particles is decreased because of the equilibrium reaction, and therefore it is preferable to neutralize the reaction system by adding an alkali aqueous solution such as sodium hydroxide, potassium hydroxide or sodium carbonate immediately after the completion of the reaction.

The vinyl monomer (F) used in the present invention is used to improve flame retardancy effects and the appearance of the final molded product. It is composed of: 100 to 20 % by weight, preferably 100 to 80 % by weight and more preferably 100 % by weight, of a polyfunctional monomer (D) having 2 or more polymerizable unsaturated bonds in its molecule; and 0 to 80 % by weight, preferably 0 to 20 % by weight and more preferably 0 % by weight, of other copolymerizable monomer (E). If the amount of the polyfunctional monomer (D) is too small or the amount of the copolymerizable monomer (E) is too large, the graft copolymer obtained finally tends to have less effect of improving flame retardancy and impact resistance.

The amount of the vinyl monomer (F) used is 0 to 10 parts by weight and preferably 0.1 to 5 parts by weight. If the amount is more than 10 parts by weight, the final molded product tends to have lower flame retardancy and impact resistance. The vinyl monomer (F) may be polymerized in several steps, and besides they may be polymerized after the reaction with the graft-linking agent (C) and before the neutralization.

The polyfunctional monomer (D) is a compound having two or more polymerizable unsaturated bonds in its molecule. Specific examples of such polyfunctional monomers include: allyl methacrylate, triallyl cyanurate, triallyl isocyanurate, diallyl phthalate, ethylene glycol dimethacrylate, 1,3-butylene glycol dimethacrylate and divinylbenzene. These compounds may be used alone or in combination of two or more of them.

Specific examples of copolymerizable monomers (E) include: aromatic vinyl monomers such as styrene, α-methylstyrene, p-methylstyrene and p-butylstyrene; vinyl cyanide monomers such as acrylonitrile and methacrylonitrile; (meth)acrylic ester monomers such as methyl acrylate, ethyl acrylate, propyl acrylate, butyl acrylate, 2-ethylhexyl acrylate, glycidyl acrylate, hydroxyethyl acrylate, hydroxybutyl acrylate, methyl methacrylate, ethyl methacrylate, butyl methacrylate, lauryl methacrylate, glycidyl methacrylate and hydroxyethyl methacrylate; and carboxyl group-containing vinyl monomers such as itaconic acid, (meth)acrylic acid, fumaric acid and maleic acid. These monomers may be used alone or in combination of two or more of them.

The vinyl monomer (G) used in the present invention is an ingredient which is used to ensure the compatibility of a graft copolymer with a thermoplastic resin so that the graft copolymer is uniformly dispersed in the thermoplastic resin. Specific examples of such monomers are the same as those of other copolymerizable monomers (E) contained in the above-described vinyl monomers (F). Specifically, they include: aromatic vinyl monomers such as styrene and α-methylstyrene; vinyl cyanide monomers such as acrylonitrile; (meth)acrylic ester monomers such as methyl acrylate, ethyl acrylate, butyl acrylate, methyl methacrylate, ethyl methacrylate and butyl methacrylate; and carboxyl group-containing vinyl monomers such as itaconic acid, (meth)acrylic acid, fumaric acid and maleic acid. These monomers may be used alone or in combination of two or more of them.

The graft polymerization of each of the vinyl monomer (F) and the vinyl monomer (G) is carried out employing radical polymerization. Each of the vinyl monomer (F) and the vinyl monomer (G) may be polymerized in one step or in two or more steps.

The method for carrying out the above-described radical polymerization is not limited to any specific one. A method in which reaction is allowed to proceed by thermally decomposing a radical initiator or a method in which a redox reaction is carried out using a reducing agent may be employed.

Specific examples of radical initiators include: organic peroxides such as cumene hydroperoxide, t-butyl hydroperoxide, benzoyl peroxide, t-butyl peroxyisopropyl carbonate, di-t-butylperoxide, t-butyl peroxylaurate, lauroyl peroxide, peroxide succinate, cyclohexanone peroxide, acetylacetone peroxide and p-menthane hydroperoxide; inorganic peroxides such as potassium persulfate and ammonium persulfate; and azo compounds such as 2,2'-azobisisobutylonitrile and 2,2'-azobis-2,4-dimethylvaleronitrile. Of these radical initiators, organic peroxides or inorganic peroxides are particularly preferable because of their high reactivity.

The amount of the radical initiator used is within the range known to a person skilled in the art.

If the polymerization is carried out in a redox system such as ferrous sulfate-sodium formaldehyde sulfoxylate-disodium salt of ethylenediaminetetraacetic acid, ferrous sulfate-glucose-sodium pyrophosphate and ferrous sulfate-sodium pyrophosphate-sodium phosphate, the polymerization is completed even at low temperatures.

Methods for isolating the polymer from the graft copolymer latex obtained by the emulsion polymerization include: for example, a method in which a metal salt such as calcium chloride, magnesium chloride or magnesium sulfate is added to the latex to coagulate the same, and then the resulting product is heated, dehydrated, washed and dried. Spray drying can also be employed.

The graft copolymer thus obtained is mixed into various types of thermoplastic resins so as to provide flame-retardant resin compositions having excellent flame retardancy and impact resistance.

As the above-described thermoplastic resin, polycarbonate-based resins that contain 50 % by weight or more of polycarbonate are preferable from the viewpoint of obtaining good flame retardancy. Specific preferable examples of polycarbonate-based resins include: polycarbonate; polycarbonate/polyester blend resins such as polycarbonate/polyethylene terephthalate blend resin and polycarbonate/polybutylene terephthalate blend resin; polycarbonate / acrylonitrile-styrene copolymer blend resin; polycarbonate/butadiene-styrene copolymer (HIPS resin) blend resin; polycarbonate/acrylonitrile-butadiene rubber-styrene copolymer (ABS resin) blend resin; polycarbonate/acrylonitrile-butadinene rubber-α-methylstyrene copolymer blend resin; polycarbonate / styrene-butadiene rubber-acrylonitrile-N-phenylmaleimide copolymer blend resin; and polycarbonate/acrylonitrile-acrylic rubber-styrene copolymer (AAS resin) blend resin.

The amount of the above-described polyorganosiloxane-containing graft copolymer added to the thermoplastic resin is preferably 0.1 to 20 parts by weight per 100 parts by weight of the thermoplastic resin in terms of flame retardancy. If the amount is less than 0.1 part by weight, the flame retardancy of the final molded product cannot sometimes be improved, whereas if the amount is more than 20 parts by weight, the processability (particularly melt flow properties) of the resin composition for producing a molded product may deteriorate significantly.

The flame-retardant powder composed of the polyorganosiloxane-containing graft copolymer which is obtained from the latex through the coagulation, heat treatment, dehydration and drying operations can be mixed into the thermoplastic resin with a Henschel mixer or a ribbon blender and melt-kneaded with a roll, an extruder or a kneader.

In this mixing process, commonly used ingredients, such as an antioxidant, anti-dripping agent, high molecular weight processing aid, flame-retardant, impact modifier, plasticizer, lubricant, UV absorber, pigment, glass fiber, filler or polymeric lubricant, can also be mixed into the thermoplastic resin.

As the method for molding the flame-retardant resin composition, methods can be applied which are used in the ordinary molding of thermoplastic resin compositions, such as injection molding, extrusion processing, blow molding and calendaring.

The applications in which the molded products produced from the flame-retardant resin composition of the present invention are not limited to any specific one. The molded products have a variety of applications in which flame retardancy is required, such as desktop computers, laptop computers, tower computers, server type of computers, printers and copying machines.

The resultant molded products have excellent impact resistance and flame retardancy.

EXAMPLES

The present invention will be described in detail based on Examples; however, it should be understood that these Examples are not intended to limit the present invention. Measurements and tests in the following Examples and Comparative Examples were made as follows.

[Graft Efficiency]

A latex of a polyorganosiloxane-containing graft copolymer, wherein the ratio of the graft component used to the entire polymer was already known, was added to methanol whose amount was about 10 times that of the latex so as to be coagulated. The recovered product underwent vacuum drying at 80°C for 12 hours to obtain a graft copolymer. One g of the graft copolymer was weighed accurately and immersed in acetone for 8 hours to dissolve the graft polymer that was not bound to polyorganosiloxane in acetone. Then the acetone solution was centrifuged at 12,000 rpm for 60 minutes and the insolubles in acetone were decanted off so as to obtain a polymer-containing acetone solution. The acetone-insolubles were then immersed in acetone and decanted off in the same manner as above to remove the insolubles in acetone. The resultant acetone solution was mixed with the above polymer-containing acetone solution. The resultant polymer-containing acetone solution underwent vacuum drying at 80°C for 12 hours, and the extracted residue was considered as graft polymer that was not bound to polyorganosiloxane and weighed. The graft efficiency was calculated by the equation:

$$\{1 - [\text{the weight of the extracted residue contained in acetone-soluble matter} \div (\text{the amount of graft copolymer} \times \text{the ratio of graft polymer constituent } (\%) \div 100)]\} \times 100 \ (\%).$$

[Polymerization Conversion]

The latex was dried in a hot-air drier at 120°C for 1 hour to obtain the solid content ratio. And the polymerization conversion was calculated in terms of % by the following equation: 100 × the solid content ratio/the fed monomer ratio (= the total amount of the monomers fed/the total amount of the raw materials used in polymerization).

[Volume Average Particle Size]

The volume average particle size was measured for each of the seed polymer, polyorganosiloxane particles and graft copolymer in the latex. Each of the volume average particle size ($\mu$m) was measured by a light scattering method with MICROTRAC UPA manufactured by LEED & NORTHRUP INSTRUMENTS.

[Impact Resistance]

Impact resistance was evaluated in accordance with ASTM D-256 by conducting Izod test using a 1/8 inch notched bar at -10°C.

[Flame Retardancy]

Flame retardancy was evaluated by conducting UL94 V test.

(Production Example 1)

Five parts by weight of each of the graft-linking agents shown in Table 1 was added to a mixture composed of 300 parts by weight of pure water, 0.5 part by weight (as solid) of sodium dodecylbenzenesulfonate (SDBS) and 98 parts by weight of octamethylcyclotetrasiloxane (D4), and the resultant was stirred with a homomixer at 7,000 rpm for 5 minutes to prepare an emulsion. The emulsion was added at once to a five-neck flask equipped with a stirrer, a reflux condenser, a nitrogen inlet port, a monomer addition port and a thermometer.

Then the emulsion was warmed up to 80°C in a stream of nitrogen while stirring and 1 part by weight (as solid) of 10 % aqueous solution of dodecylbenzenesulfonic acid was added to the emulsion. The emulsion was stirred at 80°C for 6 hours, cooled to 25°C, and allowed to stand for 30 hours to obtain a latex of polyorganosiloxane.

Then, 30 parts by weight (as solid) of the latex of polyorganosiloxane was fed into a five-neck flask equipped with a stirrer, a reflux condenser, a nitrogen inlet port, a monomer addition port and a thermometer and warmed up to 40°C in a stream of nitrogen while stirring. After the temperature of the latex of polyorganosiloxane reached 40°C, 0.26 part by weight of sodium formaldehyde sulfoxylate (SFS), 0.004 part by weight of disodium ethylenediaminetetraacetate (EDTA), and 0.001 part by weight of ferrous sulfate were added. Then 70 parts by weight of methyl methacrylate (MMA) and 0.1 part by weight of cumene hydroperoxide were mixed and the mixture was added dropwise to the latex mixture over 1 hour, and after the addition, the resultant latex was stirred for 1 hour to obtain a latex of a polyorganosiloxane graft copolymer. The measurements of the graft efficiency of the resultant latex of a polyorganosiloxane graft copolymer are shown in Table 1.

(Production Examples 2 to 8)

300 parts by weight of pure water and 12 parts by weight (as solid) of sodium dodecylbenzenesulfonate (SDBS) were placed in a five-neck flask equipped with a stirrer, a reflux condenser, a nitrogen inlet port, a monomer addition port and a thermometer and the resultant was warmed up to 50°C. After the temperature of the mixture reached 50°C, the atmosphere was replaced with nitrogen. Then, 10 parts by weight of butyl acrylate (BA), 3 parts by weight of t-dodecyl mercaptan (tDM) and 0.01 part by weight of p-methane hydroperoxide were added to the mixture. 30 minutes after the addition, 0.002 part by weight of ferrous sulfate ($FeSO_4·7H_2O$), 0.005 part by weight of disodium ethylenediaminetetraacetate and 0.2 part by weight of sodium formaldehyde sulfoxylate were added to the mixture to allow polymerization and proceeded for another 1 hour. Then, a mixed solution of 90 parts by weight of butyl acrylate (BA), 27 parts by weight of t-dodecyl mercaptan (tDM) and 0.1 part by weight of p-methane hydroperoxide were continuously added over 3 hours. Two hours after the addition, post-polymerization was conducted to give a latex of a seed polymer (SE-1). The polymerization conversion of the resultant latex of a seed polymer (tDM was included in monomers) was 92 % by weight and the volume average particle size of the same was 0.03 $\mu$m.

After the above polymerization, 2 parts by weight (as solid) of the seed polymer (SE-1) of Production Example 1 was fed into a five-neck flask equipped with a stirrer, a reflux condenser, a nitrogen inlet port, a monomer addition port and a thermometer. Then, each graft-linking agent (A) shown in Table 2 was added, in each amount by weight shown in Table 2, to a mixture of 300 parts by weight of pure water, 0.5 part by weight (as solid) of sodium dodecylbenzenesulfonate (SDBS) and 98 parts by weight of octamethylcyclotetrasiloxane (D4), and the resultant was stirred with a homomixer at 7,000 rpm for 5 minutes to prepare an emulsion, and the emulsion was added at once to the five-neck flask.

Then, the mixture was warmed up to 80°C in a stream of nitrogen while stirring, and 1 part by weight (as solid) of 10 % aqueous solution of dodecylbenzenesulfonic acid was added to the mixture. The mixture was stirred at 80°C for 15 hours, cooled to 25°C, and left for 30 hours to obtain a latex of polyorganosiloxane (B).

Then, the latex of polyorganosiloxane (B) was warmed up to 40°C in a stream of nitrogen while stirring. Separately, each graft-linking agent (C) shown in Table 2 was added, in each amount by weight shown in Table 2, to a mixture of 5.2 parts by weight of pure water and 0.005 part by weight (as solid) of sodium dodecylbenzenesulfonate (SDBS), and the resultant was stirred with a stirrer for 30 minutes to prepare an emulsion. The emulsion was added at once to the above-described latex of polyorganosiloxane (B).

After that, the resultant mixture was stirred at 40°C for 2 hours, the pH of each mixture was adjusted to 6.5 with sodium hydroxide, and the polymerization was completed to produce each latex of polyorganosiloxane (SR-1 to SR-7). The polymerization conversion and volume average particle size of each resultant latex of polyorganosiloxane are shown in Table 2.

(Examples 1 to 3 and Comparative Examples 1 to 4)

The latex of polyorganosiloxane particles (SR-1 to SR-7) obtained in Production Examples 2 to 8 was fed in an amount by weight (as solid) shown in Table 3 into a five-neck flask equipped with a stirrer, a reflux condenser, a nitrogen inlet port, a monomer addition port and a thermometer and the resultant was warmed up to 60°C in a stream of nitrogen while stirring. After the temperature of the latex reached 60°C, 0.13 part by weight of sodium formaldehyde sulfoxylate (SFS), 0.004 part by weight of disodium ethylenediaminetetraacetate (EDTA), and 0.001 part by weight of ferrous sulfate were added. Then, allyl methacrylate (ALMA) and the radical initiator shown in Table 3 were mixed in amounts by weight shown in Table 3, added at once to the above mixture, and the resultant was stirred at 60°C for 1 hour. Then, methyl methacrylate (MMA) and the radical initiator shown in Table 3 were mixed in amounts by weight shown in Table 3, and the resultant was added dropwise to the above mixture over 1 hour. After completing the addition, the mixture was stirred for an additional 1 hour to obtain a graft copolymer latex. The polymerization conversion and the volume average particle size of the resultant graft copolymer latex are shown in Table 3.

Then, the latex was diluted with pure water so that the solid content became 15 %, and 4 parts by weight (as solid) of 2.5 % aqueous solution of calcium chloride was added to obtain coagulated slurry. The coagulated slurry was heated to 95°C, cooled to 50°C and dehydrated, washed, and dried to produce a powder of polyorganosiloxane-containing graft copolymer (SG-1 to SG-7).

(Examples 4 to 6 and Comparative Examples 5 to 8)

A polycarbonate resin (TEIJIN CHEMICALS LTD., trade name: Panlite L 1225 WX), a polytetrafluoroethylene as an anti-dripping agent (DAIKIN INDUSTRIES LTD., trade name: Polyflon FA-500) and each of the polyorganosiloxane graft copolymer powders (SG-1 to SG-7) obtained in Examples 1 to 3 and Comparative Examples 1 to 4 were mixed according to the formulation shown in Table 4.

The obtained mixture was melt-kneaded with a twin-screw extruder (Japan Steel Works, LTD., TEX44SS) at 270°C to produce pellets. The obtained pellets were formed into 1/20-inch test pieces for flame retardancy evaluation and 1/8-inch test pieces for impact resistance evaluation with an injection molding machine, FAS100B, manufactured by FANUC with its cylinder temperature set at 280°C. The obtained test pieces were evaluated for flame retardancy and impact resistance in accordance with the above-described evaluation methods. The impact resistance and flame retardancy of each molded product are shown in Table 4.

(Comparative Example 9)

Mixing, molding and evaluation were performed in the same manner as in Example 4 except that no powder of polyorganosiloxane graft copolymer was added. The results are shown in Table 4.

TABLE 1

| Type of graft-linking agent | Abbreviated name of graft-linking agent | Graft efficiency |
|---|---|---|
| γ-Methacryloyloxypropyl-dimethoxymethylsilane | DSMA | 95 % |
| Mercaptopropylmethyl-dimethoxysilane | MPrDMS | 40 % |

(continued)

| Type of graft-linking agent | Abbreviated name of graft-linking agent | Graft efficiency |
|---|---|---|
| Vinylmethyldimethoxysilane | VDMS | 20 % |

TABLE 2

| | | | Production Examples | | | | | | |
|---|---|---|---|---|---|---|---|---|---|
| | | | 2 | 3 | 4 | 5 | 6 | 7 | 8 |
| Polyorganosiloxane particles (B) (parts) | SE-1 | | 2 | 2 | 2 | 2 | 2 | 2 | 2 |
| | D4 | | 98 | 98 | 98 | 98 | 98 | 98 | 98 |
| | Graft-linking agent (A) (parts) | DSMA | - | - | - | 1.5 | 2.5 | - | 1.5 |
| | | MPrDMS | 1.5 | 3 | - | - | - | 1.5 | - |
| | | VDMS | - | - | 3 | - | - | - | - |
| Graft-linking agent (C) (parts) | DSMA | | 1 | 2 | 2 | 1 | - | - | - |
| | MPrDMS | | - | - | - | - | - | 1 | 1 |
| Particle size (μm) | | | 0.25 | 0.24 | 0.24 | 0.25 | 0.24 | 0.25 | 0.25 |
| Polyorganosiloxane particles No. | | | SR-1 | SR-2 | SR-3 | SR-4 | SR-5 | SR-6 | SR-7 |

TABLE 3

| | | Examples | | | Comparative Examples | | | |
|---|---|---|---|---|---|---|---|---|
| | | 1 | 2 | 3 | 1 | 2 | 3 | 4 |
| Polyorganosiloxane particles (B) (parts) + Graft-linking agent (C) (parts) | SR-1 | 80 | - | - | - | - | - | - |
| | SR-2 | - | 80 | - | - | - | - | - |
| | SR-3 | - | - | 80 | - | - | - | - |
| | SR-4 | - | - | - | 80 | - | - | - |
| | SR-5 | - | - | - | - | 80 | - | - |
| | SR-6 | - | - | - | - | - | 80 | - |
| | SR-7 | - | - | - | - | - | - | 80 |
| Monomer (F) (parts) | ALMA | 1.5 | 1.5 | 1.5 | 1.5 | 1.5 | 1.5 | 1.5 |
| | Cumene hydroperoxide | 0.05 | 0.05 | 0.05 | 0.05 | 0.05 | 0.05 | 0.05 |
| Monomer (G) (parts) | MMA | 20 | 20 | 20 | 20 | 20 | 20 | 20 |
| | Cumene hydroperoxide | 0.07 | 0.07 | 0.07 | 0.07 | 0.07 | 0.07 | 0.07 |
| Polymerization conversion (%) | (F), after reaction | 99 | 99 | 99 | 99 | 99 | 99 | 99 |
| | (G), after reaction | 99 | 99 | 99 | 99 | 99 | 99 | 99 |
| Particle size (μm) | | 0.25 | 0.24 | 0.24 | 0.25 | 0.24 | 0.25 | 0.25 |
| Graft copolymer No. | | SG-1 | SG-2 | SG-3 | SG-4 | SG-5 | SG-6 | SG-7 |

TABLE 4

| | | Examples | | | Comparative Examples | | | | |
|---|---|---|---|---|---|---|---|---|---|
| | | 4 | 5 | 6 | 5 | 6 | 7 | 8 | 9 |
| Thermoplastic resin (parts) | PC | 100 | 100 | 100 | 100 | 100 | 100 | 100 | 100 |

(continued)

| | | Examples | | | Comparative Examples | | | | |
|---|---|---|---|---|---|---|---|---|---|
| | | 4 | 5 | 6 | 5 | 6 | 7 | 8 | 9 |
| Graft copolymer (parts) | SG-1 | 3 | - | - | - | - | - | - | - |
| | SG-2 | - | 3 | - | - | - | - | - | - |
| | SG-3 | - | - | 3 | - | - | - | - | - |
| | SG-4 | - | - | - | 3 | - | - | - | - |
| | SG-5 | - | - | - | - | 3 | - | - | - |
| | SG-6 | - | - | - | - | - | 3 | - | - |
| | SG-7 | - | - | - | - | - | - | 3 | - |
| Anti-dripping agent (parts) | PTFE | 0.4 | 0.4 | 0.4 | 0.4 | 0.4 | 0.4 | 0.4 | 0.4 |
| Flame retardancy Molded product with 1.2 mm thickness | Total flaming time (second) | 39 | 35 | 44 | 56 | 66 | 92 | 118 | 190 |
| | Dripping | no | no | no | no | no | no | no | yes |
| | Rating | V-0 | V-0 | V-0 | V-1 | V-1 | V-1 | V-1 | Not-V |
| Impact resistance 1/8 inch IZOD impact strength | -10°C (kJ/m$^2$) | 30 | 28 | 35 | 20 | 15 | 22 | 18 | 10 |

## Claims

1. A polyorganosiloxane-containing graft copolymer obtained by: adding 0.1 to 10 parts by weight of a graft-linking agent (C) to 30 to 94.9 parts by weight of a polyorganosiloxane (B) modified with a graft-linking agent (A) and in a latex form to react them with each other; reacting the resultant reaction product with 0 to 10 parts by weight of a monomer (F) comprising 100 to 20 % by weight of a polyfunctional monomer (D) that has two or more polymerizable unsaturated bonds in its molecule and 0 to 80 % by weight of another polymerizable monomer (E) in one or more steps; and polymerizing 5 to 69.9 parts by weight of a vinyl monomer (G) with the above reaction product in one or more steps (the total amount of (B), (C), (F) and (G) being 100 parts by weight), **characterized in that** the graft-linking agent (C) has a higher graft efficiency than that of the graft-linking agent (A).

2. A polyorganosiloxane-containing graft copolymer obtained by: adding 0.1 to 10 parts by weight of a graft-linking agent (C) comprising a (meth)acryloyloxy group-containing silane compound to 30 to 94.9 parts by weight of a polyorganosiloxane (B) modified with a graft-linking agent (A) comprising a mercapto group-containing silane compound or a vinyl group-containing silane compound and in a latex form to react them with each other; reacting the resultant reaction product with 0 to 10 parts by weight of a monomer (F) comprising 100 to 20 % by weight of a polyfunctional monomer (D) that has two or more polymerizable unsaturated bonds in its molecule and 0 to 80 % by weight of another polymerizable monomer (E) in one or more steps; and polymerizing 5 to 69.9 parts by weight of a vinyl monomer (G) with the resultant reaction product in one or more steps (the total amount of (B), (C), (F) and (G) being 100 parts by weight).

3. The polyorganosiloxane-containing graft copolymer according to Claim 1 or 2, wherein the reaction temperature for the graft-linking agent (C) is 20 to 60°C.

4. The polyorganosiloxane-containing graft copolymer according to any one of Claims 1 to 3, wherein the amount of the graft-linking agent (A) used is 0.1 to 10 parts by weight.

5. A resin composition, comprising the polyorganosiloxane-containing graft copolymer according to any one of Claims 1 to 4 and a thermoplastic resin.

## INTERNATIONAL SEARCH REPORT

| | International application No. |
|---|---|
| | PCT/JP2005/007841 |

| A. CLASSIFICATION OF SUBJECT MATTER |
|---|
| Int.Cl$^7$ C08F283/12, C08L51/08, 101/00 |

According to International Patent Classification (IPC) or to both national classification and IPC

| B. FIELDS SEARCHED |
|---|

Minimum documentation searched (classification system followed by classification symbols)
Int.Cl$^7$ C08F283/12, C08L51/08, 101/00

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 10-316724 A (Kaneka Corp.), 02 December, 1998 (02.12.98), Full text (Family: none) | 1-5 |
| X | JP 10-310616 A (Kaneka Corp.), 24 November, 1998 (24.11.98), Full text (Family: none) | 1-5 |
| P,X | JP 2004-137374 A (Mitsubishi Rayon Co., Ltd.), 13 May, 2004 (13.05.04), Full text (Family: none) | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 July, 2005 (22.07.05) | 09 August, 2005 (09.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

<table>
<tr><td colspan="2">**INTERNATIONAL SEARCH REPORT**</td><td>International application No.<br><br>PCT/JP2005/007841</td></tr>
<tr><td colspan="3">C (Continuation). DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td>E,X</td><td>JP 2005-187765 A (Clariant Polymers<br>Kabushiki Kaisha),<br>14 July, 2005 (14.07.05),<br>Full text<br>(Family: none)</td><td>1-5</td></tr>
<tr><td>A</td><td>JP 2-8209 A (Japan Synthetic Rubber Co.,<br>Ltd.),<br>11 January, 1990 (11.01.90),<br>Full text<br>(Family: none)</td><td>1-5</td></tr>
</table>

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 54036365 A
- JP 2003238639 A
- JP 2001288269 A
- JP 11222554 A